# EUROPEAN PATENT APPLICATION

(11) **EP 2 136 093 A1**
(43) Date of publication of application: **23.12.2009**
(21) Application number: 08740045.3
(22) Date of filing: 08.04.2008
(51) Int. Cl.: F16C 33/66, F03D 11/00, F16C 33/52

(54) **RETAINER FOR ROLLING BEARING AND BEARING ADAPTED FOR USE IN WIND-DRIVEN GENERATOR AND HAVING THE RETAINER**

(30) Priority: 09.04.2007 JP 2007101694
(71) Applicant: JTEKT Corporation, Osaka-shi Osaka 542-8502 (JP)
(72) Inventor: YASUDA, Hirotaka, Osaka-shi Osaka 542-8502 (JP)
(74) Representative: Schaeberle, Steffen
(86) International application number: PCT/JP2008/056942
(87) International publication number: WO 2008/126841

(57) **Abstract**

To provide a cage for a rolling bearing in which the rolling bearing is lubricated, for example, by a combination of oil bath lubrication and a forced-feed oiling pump, and even when the forced-feed oiling pump is stopped, a defective lubrication can be prevented, and also to provide a bearing for wind power generation which is provided with this cage.

Lubricating oil sumps 24 are provided at a larger-diameter ring 21 of a cage 14. Each lubricating oil sump 24 is provided between a tapered roller 13 and a tapered roller 13 so as not to abut with the tapered roller 13. With this arrangement, when the lubricating oil sump 24 is located in lubricating oil stored at a lower portion of the bearing, the lubricating oil is held in the lubricating oil sump, and in accordance with subsequent rotation, the lubricating oil held in the lubricating oil sump 24 is allowed to drop.

## Description

### TECHNICAL FIELD

This invention relates to a cage suited for a rolling bearing used, for example, for supporting a main shaft of a wind turbine generator and also to a bearing for wind power generation provided with the same.

### BACKGROUND ART

As a rolling bearing used for supporting a main shaft of a wind turbine generator, for example, a tapered roller bearing is used, and a pin type cage is used as its cage (Patent Literature 1).

In a rolling bearing, it is known to provide a lubricating oil sump in a cage in order to enhance a lubricating ability, and such a lubricating oil sump is located at a position close to rolling elements, and also its opening is directed toward the rolling elements.

In Patent Literature 1, also, it is disclosed that a lubricating oil sump is provided in that surface of the pin-type cage abutting against larger end faces of tapered rollers.
Patent Literature 1: JP-A-2006-300128

### DISCLOSURE OF THE INVENTION

### PROBLEM THAT THE INVENTION IS TO SOLVE

Considering a high-speed rotation as a severe condition for the bearing, the conventional lubricating oil sump is provided for the purpose of preventing seizure of the bearing during the high-speed rotation.

On one hand, a bearing used in a wind power generation apparatus needs to stand not only the high-speed rotation but also use under the following severe conditions.

Namely, in the wind power generation, a control is effected such that rotary blades will not be rotated in the case of a strong wind. However, even in this case, the rotary blades rotate at a very low speed. At this time, a pump for effecting forced-feed oiling is stopped when power transmission is stopped. In oil bath lubrication, a lowermost portion of the rolling bearing is immersed in lubricating oil, but in the case where a loaded zone is wide, the bearing undergoes a load also at a position above a lubricating oil level of the oil bath lubrication. Furthermore, a main shaft in the wind power generation has rotary blades provided at one end thereof, and therefore is disposed in a cantilever condition, and an upwardly-directed force acts on a rolling bearing provided at the other end thereof, and the loaded zone is not disposed at the exactly-lower portion (lowermost portion), but is disposed above the lubricating oil level of the oil bath lubrication. In this case, although an upper portion of the rolling bearing undergoes a large load, the lubricating oil is not supplied there at all. This is not limited to the rolling bearing for wind power generation, and also in a rolling bearing in which a loaded zone is disposed at an exactly-lower portion, but is wide and a rolling bearing in which a loaded zone is not disposed at an exactly-lower portion, it is possible that a similar defective lubrication occurs in the event of a power failure or others. Furthermore, in various lubricating oil supply methods, it is possible that a defective lubrication occurs regardless of the position of the loaded zone when an ordinary lubricating route is shut off.

It is an object of this invention to provide a cage for a rolling bearing in which the rolling bearing is lubricated, for example, by a combination of oil bath lubrication and a forced-feed oiling pump, and even when the forced-feed oiling pump is stopped, a defective lubrication can be prevented, and also to provide a bearing for wind power generation which is provided with this cage.

### MEANS FOR SOLVING THE PROBLEM

A cage for a rolling bearing according to this invention is **characterized in that** a lubricating oil sump is provided at that surface which will not contact rolling elements, and when the lubricating oil sump is located in lubricating oil stored at a lower portion of the bearing, the lubricating oil is held in the lubricating oil sump, and in accordance with subsequent rotation, the lubricating oil held in the lubricating oil sump is allowed to drop.

A conventional lubricating oil sump is aimed at preventing defective lubricating oil during high-speed rotation (ordinary condition), and the lubricating oil sump is provided at that surface contacting rolling elements so that lubricating oil can be easily moved from the lubricating oil sump to the rolling element. In contrast with this, the lubricating oil sump in this invention is aimed at preventing defective lubricating oil under non-ordinary conditions (for example, during a very low-speed operation in wind power generation (described later) in a strong wind, during the rotation by inertia upon stopping of a drive apparatus, etc.), and therefore is provided at the surface which will not contact the rolling elements (so that a partition portion exists between the lubricating oil sump and the rolling element). In accordance with the rotation of the cage, the lubricating oil held in the lubricating oil sump is allowed to drop onto the rolling element or the vicinity of the rolling element, thereby preventing the defective lubrication. The shape and number of the lubricating oil sumps are so adjusted that the holding and dropping of the lubricating oil can be suitably effected.

The rolling bearing cage of this invention is effective particularly when a rotation shaft supported by the rolling bearing is rotated with a downwardly-directed load acting on one end portion of the rotation shaft. Usually, in the case of a rolling bearing supporting a horizontal rotation shaft, its loaded zone is disposed at a lower portion (lowermost portion) because of a dead weight of the shaft, etc. However, even in oil bath lubrication, the bearing undergoes a load at a position above a lubricating oil level of the oil bath lubrication when the loaded zone is wide, and therefore there is a fear of defective lubrication. Furthermore, in the case of the rotation shaft which rotates with a downwardly-directed load acting on one end portion thereof (in a cantilever condition), a force acts upwardly at a rolling bearing-mounted portion at the other end portion, so that a loaded zone is often disposed at an upper portion (above the level of the oil bath), and it is thought that lack of lubrication oil at the upper portion becomes the cause of seizure. Therefore, the lubricating oil in the oil bath is held by the lubricating oil sump, and in accordance with the rotation of the cage, the lubricating oil flowing from the lubricating oil sump is allowed to drop on the rolling element disposed rearwardly of the lubricating oil sump in the rotating direction, thereby supplying the lubricating oil to the rolling element disposed at the loaded zone, thus solving this problem.

The cage is, for example, a pin type cage. The pin type cage is suited in the case of receiving a large load, and comprises a pair of rings disposed at a predetermined intervals in an axial direction, and a plurality of pins extending between the two rings, and lubricating oil sumps are formed at one or both of the pair of rings. As the bearing employing the pin type cage, there is, for example, a tapered roller bearing (in which two rings are different in diameter), and a self-aligning roller bearing (in which two rings are different in diameter) and a cylindrical roller bearing (in which two rings have the same diameter) other than the tapered roller bearing may be used.

The cage is not limited to the pin type cage, and may be a one-piece cage, and may be other various types. A material (whether it is a resin or metal), a processing method, etc., are not limited. The one-piece cage is formed, for example, by pressing or forging, and includes at least one annular portion, and a plurality of pillar portions provided at predetermined intervals in a circumferential direction of the annular portion to form pockets, and lubricating oil sumps are formed in the at least one annular portion. As the bearing having the one-piece cage, there are, for example, a tapered roller bearing, a self-aligning roller bearing, and a cylindrical roller bearing, and a deep groove ball bearing, an angular contact ball bearing, etc., other than these may be used.

The rolling bearing may be a single row type or a double row type, and may be a triple or more row type. Furthermore, two bearings may be arranged in contact with each other, or may be arranged at a predetermined interval. In the double or more row bearing, the bearings may be used in face to face relation or in back to back relation.

The lubricating oil sump is formed, for example, by forming a hole (closed-bottom hole) in the cage. Usually, the cage includes a ring or annular portion disposed axially outwardly of rolling elements, and holes serving as the lubricating oil sumps are formed in an axially-inner face or a radially-inner face of this ring or annular portion. The number of the holes and the positions of the holes are not limited. Furthermore, the hole may be a round hole or an elongated hole. To facilitate the formation of the hole, the shape of the cage may be changed, and a surface for facilitating the formation of the hole may be formed at part of the cage by chamfering or others. Usually, in the case of forming a hole, the hole is perpendicular to a surface, but the hole is not limited to this, and may be inclined relative to the surface. In the case of inclining the hole, the surface of the cage may be inclined relative to a vertical plane while the direction of the hole may be horizontal, or the surface of the cage may be inclined relative to a vertical plane while the direction of the hole may be inclined relative to the surface of the cage and also to the horizontal. Furthermore, it may be inclined relative to the rotating direction. By inclining the hole relative to the rotating direction, the amount of flowing-out of the lubricating oil at an initial stage of the rotation can be reduced, and the lubricating ability at the upper portion of the bearing can be enhanced.

The lubricating oil sump can be formed by fixing a container-like member to the cage. Preferably, the container-like member can be post mounted on the already-existing cage by welding. In the case of forming a hole, the direction of its opening is limited, whereas in the case of welding the container-like member, the direction of an opening of the container-like member can be easily set according to a position to which lubricating oil is to be supplied. For example, the direction of the opening can be inclined relative to the rotating direction, and furthermore the opening can be directed exactly upwardly at the lowermost portion, and also the opening can be directed exactly downwardly at the uppermost portion, which can not be achieved with the formation of holes. And besides, the lubricating oil sump can be easily post mounted on the cage of the already-installed bearing.

A main shaft of a wind turbine generator has large heavy rotary blades provided at one end portion thereof, and therefore is disposed in a cantilever condition, and there are occasions when a pump for effecting forced-feed oiling is stopped during a very low-speed rotation of the rotary blades. In the bearing for supporting this main shaft, it is preferred to use the above cage. Such a bearing for wind power generation includes an outer ring, an inner ring, a plurality of rolling elements, and a cage holding the plurality of rolling elements, and the bearing supports the main shaft having the rotary blades for wind power generation provided at one end portion thereof, and the cage is any one of the above-mentioned ones.

### ADVANTAGE OF THE INVENTION

In the rolling bearing cage of this invention and the bearing for wind power generation provided with this cage, the lubricating oil in the oil bath is held in the lubricating oil sump, and is allowed to drop at the upper portion of the bearing. Therefore, the lubricating ability is enhanced, and in the rolling bearing lubricated, for example, by a combination of oil bath lubrication and a forced-feed oiling pump, the lubrication at a very low speed can be secured even when the forced-feed oiling pump is stopped, and defective lubrication can be prevented.

### BRIEF DESCRIPTION OF THE DRAWINGS

[Fig. 1] Fig. 1 is a vertical cross-sectional view showing a rough construction of a wind power generation apparatus in which a rolling bearing cage of this invention and a bearing for wind power generation provided with this cage are adapted to be used.
[Fig. 2] Fig. 2 is a longitudinal cross-sectional view showing the rolling bearing cage of this invention and a tapered roller bearing as one example of the bearing for wind power generation provided with this cage.
[Fig. 3] Fig. 3 is a view schematically showing the principle of lubricating oil supply in the rolling bearing cage of this invention and the bearing for wind power generation provided with this cage.
[Fig. 4] Fig. 4 is views showing a first embodiment for a rolling bearing cage of this invention and a bearing for wind power generation provided with this cage, and (a) is a longitudinal cross-sectional view of an important portion, and (b) is a view of the important portion as seen from an axially-inner side.
[Fig. 5] Figs. 5(a) and (b) are longitudinal cross-sectional views of important portions showing a second embodiment for rolling bearing cages of this invention and bearings for wind power generation provided with the respective cages.
[Fig. 6] Fig. 6 is views showing a third embodiment for a rolling bearing cage of this invention and a bearing for wind power generation provided with this cage, and (a) is a longitudinal cross-sectional view of an important portion, and (b) is a view of the important portion as seen from an axially-inner side.
[Fig. 7] Fig. 7 is a longitudinal cross-sectional view of an important portion showing a fourth embodiment for a rolling bearing cage of this invention and a bearing for wind power generation provided with this cage.
[Fig. 8] Fig. 8 is a longitudinal cross-sectional view of an important portion showing a fifth embodiment for a rolling bearing cage of this invention and a bearing for wind power generation provided with this cage.
[Fig. 9] Figs. 9(a) and (b) are longitudinal cross-sectional views of important portions showing a sixth embodiment for rolling bearing cages of this invention and bearings for wind power generation provided with the respective cages.
[Fig. 10] Figs. 10(a) and (b) are longitudinal cross-sectional views of important portions showing a seventh embodiment for rolling bearing cages of this invention and bearings for wind power generation provided with the respective cages.
[Fig. 11] Fig. 11 is views showing an eighth embodiment for a rolling bearing cage of this invention and a bearing for wind power generation provided with this cage, and (a) is a view of an important portion as seen from an axially-inner side, and (b) is a cross-sectional view taken along the line b-b.
[Fig. 12] Fig. 12 is views showing a ninth embodiment for a rolling bearing cage of this invention and a bearing for wind power generation provided with this cage, and (a) is a longitudinal cross-sectional view of an important portion, and (b) is a view of the important portion as seen from an axially-inner side.

### BEST MODE FOR CARRYING OUT THE INVENTION

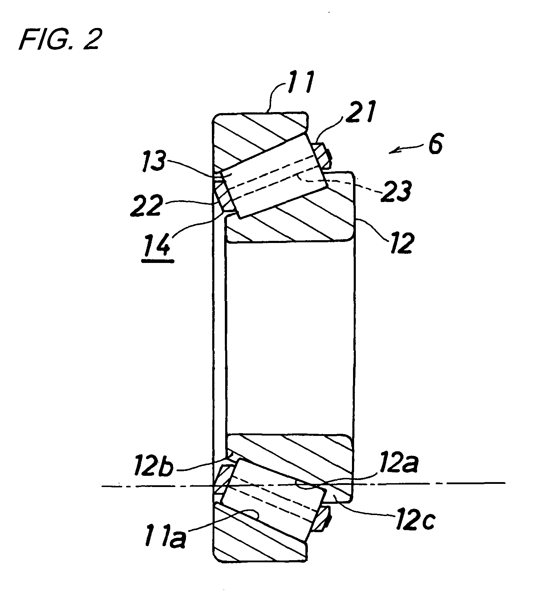

Embodiments of this invention will be described below with reference to the drawings. In the following description, "right and left" means "right and left" in Fig. 2.

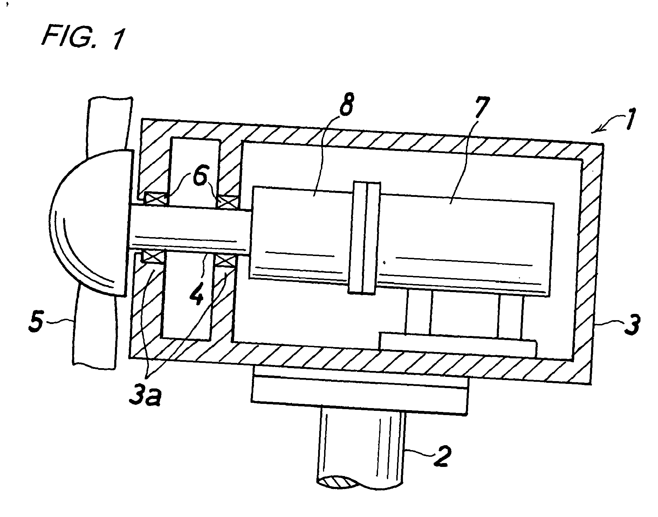

Fig. 1 shows a rough construction of a wind power generation apparatus which is one example in which a rolling bearing cage of this invention is used. Figs. 2 to 4 show a first embodiment of a rolling bearing cage of this invention.

The wind power generation apparatus 1 comprises a housing 3 horizontally-rotatably supported on a support base 2, a main shaft 4 having rotary blades 5 at its distal end and supported for rotation about a horizontal axis, a pair of rolling bearings 6 supporting the main shaft 4, a generator 7 mounted within the housing 3, and a speed increasing device 8 connecting the main shaft 4 and an input shaft of the generator 7 together.

An oil bath (not shown) for holding lubricating oil is disposed at a bearing housing portion 3a supporting the rolling bearings 6, and the rolling bearings 6 are subjected to oil bath lubrication, and also are adapted to be forcibly supplied with oil by a pump (not shown).

A pair of tapered roller bearings are used as the rolling bearings 6, and as shown in Fig. 2, each tapered roller bearing 6 comprises an outer ring 11 to be mounted on the housing 3, an inner ring 12 to be mounted on the main shaft 4, a plurality of tapered rollers 13 disposed between the two rings 11 and 12, and the pin type cage 14 holding the plurality of tapered rollers 13.

The tapered roller bearing 6 used in the wind power generation apparatus 1 is subjected to oil bath lubrication in which lubricating oil is stored in the oil bath, for example, to a level slightly above a lowermost position of an outer diameter of the inner ring 12 as indicated by a dot-and-dash line in Fig. 2. The main shaft 4 of the wind power generation apparatus 1 has the large heavy rotary blades 5 provided at the left end portion thereof, and therefore is disposed in a cantilever condition, and an upwardly-directed force acts on the rolling bearing 6 disposed at the right end portion thereof. Therefore, a loaded zone of the rolling bearing 6 is not disposed at an exactly-lower portion (lowermost portion), but is disposed above the lubrication oil level of the oil bath lubrication, and although an upper portion of the rolling bearing 6 undergoes a large load, it is possible that the lubricating oil is not supplied there.

A retaining rib 12b formed at a left end portion of a tapered raceway surface 12a to limit the axial movement of the tapered rollers 13, as well as a cone back face rib 12c formed at a right end portion of the raceway surface to limit the axial movement of the tapered rollers 13, is provided at the inner ring 12.

The outer ring 11 has a tapered raceway surface 11a, and its right end face is offset left (axially inwardly) from a right end face of the inner ring 12, and its left end face is offset left (axially outwardly) from a left end face of the inner ring 3.

The pin type cage 14 comprises a larger-diameter ring (larger-diameter annular portion) 21 and a smaller-diameter ring (smaller-diameter annular portion) 22 arranged at a predetermined interval in the axial direction, and a plurality of pins 23 extending between the two rings 21, 22. With respect to each pin 23 and the rings 21, 22, the screw fixing, in which external threads formed on an end portion of the pin 23 are threaded in internal threads, is provided at the larger-diameter ring (21) side, and the weld fixing, in which an end portion of the pin 23 is inserted in a fitting hole formed in the ring 22 and is welded thereto, is provided at the smaller-diameter ring (22) side. Each ring 21, 22 and the pins 23 are made of alloy steel, and the rings 21, 22 are not subjected to a heat treatment, and the pins 23 is hardened or is made of a high-hardness material (which is usually hardened).

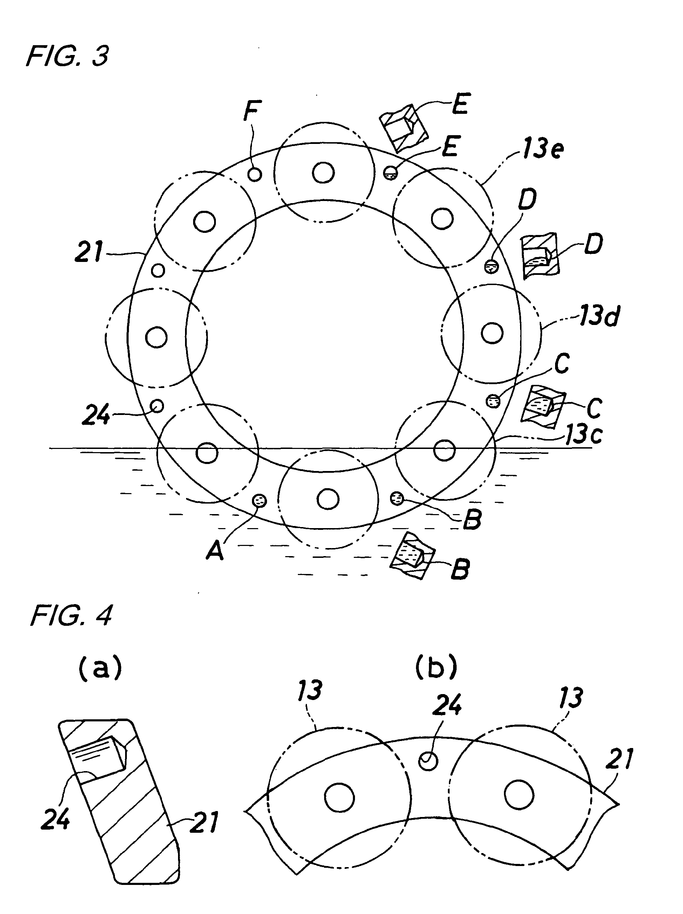

As shown in Figs. 4(a) and (b), in order that a defective lubricating oil supply liable to occur at the rolling bearing 6 (in which a loaded zone is not disposed at the exactly-lower portion) or the rolling bearing 6 (in which a loaded zone is disposed at the exactly-lower portion, but the loaded zone is wide) can be overcome, lubricating oil sumps 24 are formed in an axially-inner face of the larger-diameter ring 21 of the pin type cage 14. Here, although in the conventional one, the lubricating oil sump is provided in partially-abutting relation to the tapered rollers 13, each lubricating oil sump 24 is provided between the tapered roller 13 and the tapered roller 13 so as not to abut with the tapered roller 13. The lubricating oil sumps 24 can be obtained by forming closed-bottom holes of a cross-sectionally round shape in the larger-diameter ring 21 obtained by forging or the like. In Fig. 4, although the lubricating oil sumps 24 are provided at a radially-outer portion of the larger-diameter ring 21 and at the axially-inner side thereof, the lubricating oil sumps 24 can be provided at any arbitrary position in the radial direction of the larger-diameter ring 21, and also may be provided at the axially-outer side of the larger-diameter ring 21. Although the bottom shape of the lubricating oil sump 24 may be a tapered shape as shown in the drawings, it may be a flat shape.

Fig. 3 schematically shows the principle of supply of the lubricating oil by the lubricating oil sumps 24 in accordance with one revolution of the larger-diameter ring 21. In this Figure, it is assumed that the larger-diameter ring 21 rotates counterclockwise, and the lubricating oil sumps designated respectively by A and B are located in the oil bath, and are filled with lubricating oil. The lubricating oil flows by its dead weight from the lubricating oil sumps C and D moved out of the oil bath. As a result, the lubricating oil is allowed to drop on the tapered rollers 13c, 13d disposed rearwardly respectively of the lubricating oil sumps C and D in the rotating direction. In this condition, a certain amount of lubricating oil remains in the lubricating oil sumps 24, depending on the viscosity of the lubricating oil, the shape of the lubricating oil sump 24 and the direction of its opening, and thereafter the rotation is further made, and when the lubricating oil sumps come respectively to positions E and F, the lubricating oil sumps 24 become substantially empty of the lubricating oil. Thus, by the lubricating oil sumps C, D and E, the lubricating oil is dropped onto the tapered rollers 13c to 13e.

As will be appreciated from the above principle, the positions, number and shape of the lubricating oil sumps 24 can be changed in various ways, and the shape of the cage 14 and/or the inner ring 12 may be changed according to the positions and shape of the lubricating oil sumps 24.

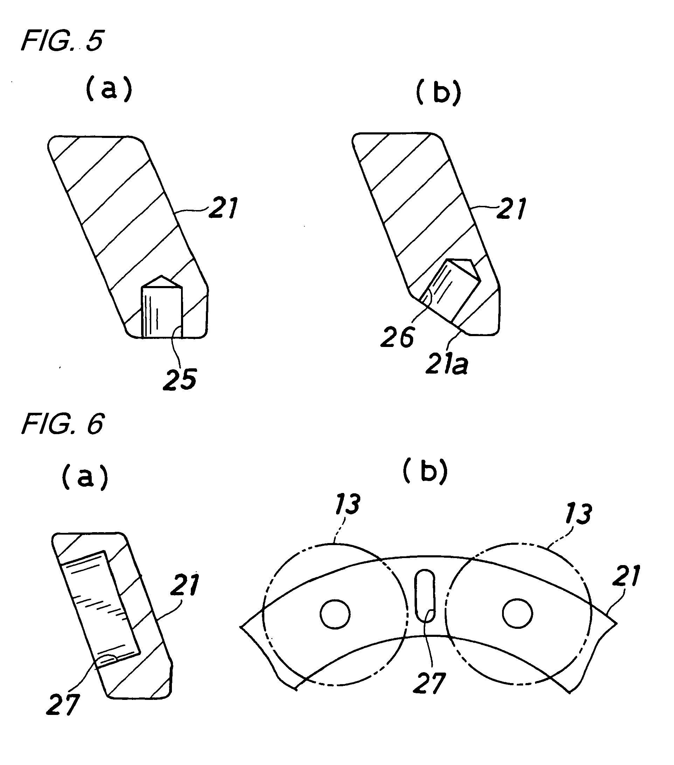

For example, the lubricating oil sumps may be formed not in the axially-inner face but in a radially-inner face of the larger-diameter ring 21, and in this case lubricating oil sumps 25 may be formed in a cylindrical radially-inner face of the larger-diameter ring 21 to extend from the radially-inner side thereof as shown in Fig. 5(a), or a chamfered portion 21a of a tapering shape may be formed on the radially-inner face of the larger-diameter ring 21, and lubricating oil sumps 26 may be formed in this chamfered portion in perpendicular relation thereto as shown in Fig. 5b.

Furthermore, the shape of the lubricating oil sump is not limited to the cross-sectionally round shape, and a lubricating oil sump 27 may be formed into an elongated hole elongated in the radial direction as shown in Fig. 6.

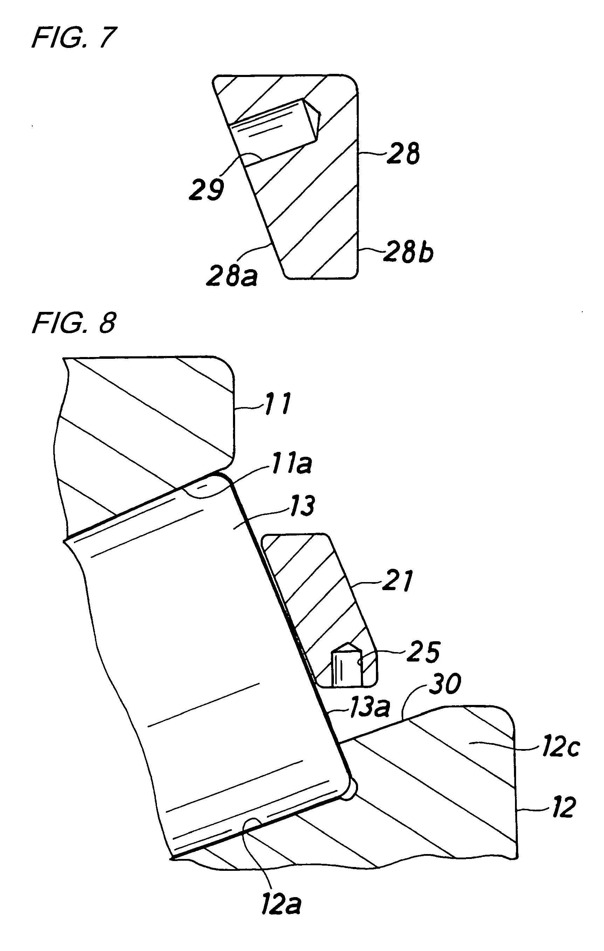

Furthermore, as shown in Fig. 7, the shape of a lubricating oil sump 27 may be changed, and also the shape of a larger-diameter ring 28 may be changed. In Fig. 7, the larger-diameter ring 28 has a tapered surface 28a serving as an axially-inner face and a vertical surface 28b serving as an axially-outer face, and the axially-outer face which is conventionally a tapered surface generally parallel to the axially-inner tapered surface 28a is formed into the vertical surface 28b, and by doing so, the radially-outer portion is thickened, and therefore the depth of the lubricating oil sump 29 is increased (the lubricating oil-holding capacity is increased).

Furthermore, the shape of the inner ring 12 may be partially changed as shown in Fig. 8. In Fig. 8, like the one shown in Fig. 5a, a lubricating oil sump 25 is formed by forming a hole in a cylindrical radially-inner face of a larger-diameter ring 21 from the radially-inner side thereof, and an opening thereof is exposed to an outer peripheral surface of a cone back face rib 12c of the inner ring 12. A tapered surface 30 for moving the lubricating oil, dropped on the outer peripheral surface of the cone back face rib 12c of the inner ring 12, toward a larger end face 13a of the tapered roller 13 is formed on this outer peripheral surface. Seizure is most liable to occur at a surface of contact between the cone back face rib 12c of the inner ring 12 and the larger end face 13a of the tapered roller 13, and the supply of the lubricating oil to this portion is assisted by the tapered surface 30 of the inner ring 12, thereby enhancing a seizure resistance.

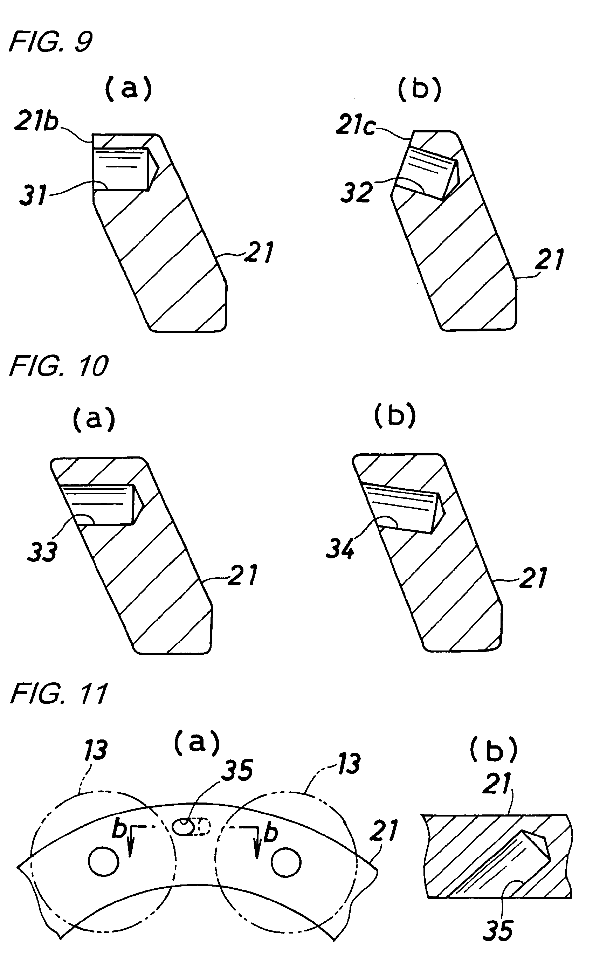

Furthermore, from the viewpoint of forming the hole, it is easier to form the hole in perpendicular relation to the surface, and therefore a lubricating oil sump-providing surface may be formed at a predetermined angle on the axially-inner face of the larger-diameter ring 21 in order to adjust the direction of the opening of the lubricating oil sump. For example, in Fig. 9(a), a lubricating oil sump-providing surface 21b is a vertical surface, a hole is formed in this lubricating oil sump-providing surface 21b in perpendicular relation thereto, and by doing so, a horizontally-open lubricating oil sump 31 is formed. In Fig. 9b, a lubricating oil sump-providing surface 21c is a tapered surface more inclined in the opposite direction than the vertical lubricating oil sump-providing surface 21b of Fig. 9(a), and a hole is formed in this lubricating oil sump-providing surface 21c in perpendicular relation thereto, and by doing so, a lubricating oil sump 32 open in a direction above the horizontal is formed.

The processing is not limited to the formation of the hole in perpendicular relation to the surface, and as shown in Fig. 10(a), a horizontally-open lubricating oil sump 33 may be formed without processing the axially-inner face of the larger-diameter ring 21, and as shown in Fig. 10(b), a lubricating oil sump 34 open in a direction above the horizontal may be formed without processing the axially-inner face of the larger-diameter ring 21.

Furthermore, in the case where an opening of a lubricating oil sump is inclined using the axially-inner face of the larger-diameter ring 21 as a reference, an opening of a lubricating oil sump 35 may be inclined relative to the rotating direction as shown in Figs. 11(a) and (b) instead of adopting the inclination as shown in Fig. 10. By doing so, the lubricating oil can be better held in the lubricating oil sump 35 during the rotation.

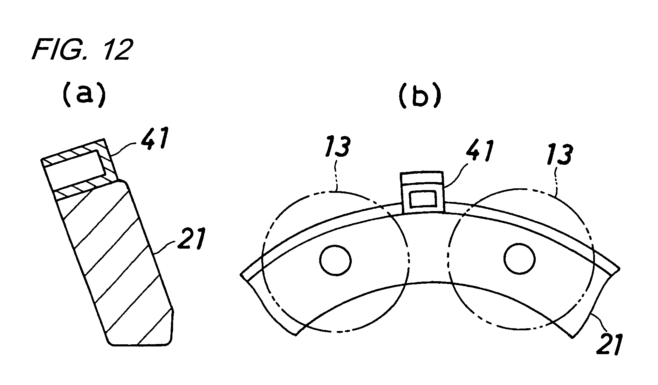

In the embodiments shown in Fig.4 to Fig. 11, although the lubricating oil sumps 24, 25, 26, 27, 29, 31, 32, 33, 34 are formed by forming the holes in the larger diameter ring 21, 28, the arrangement is not limited to this. Namely, by joining container-like members, each serving as a lubricating oil sump, integrally to a known larger-diameter ring, for example, by welding, the lubricating oil sumps can be formed. Its example is shown in Fig. 12. In Fig. 12, lubricating oil sumps 41 each comprising an axially-inwardly open container-like member of a generally square shape similar in shape to the lubricating oil sump 24 shown in Fig. 4 are fixed to a radially-outer face of a larger-diameter ring 21. The lubricating effect shown in Fig. 3 can be obtained also by the lubricating oil sumps 41 each comprising the container-like member. And besides, in the case of using the container-like members, limitations (that the direction of the opening is limited by the shape of the larger-diameter ring, that it is difficult to secure the strength when the thickness is small and that much time and labor are required for the formation of the hole) due to the formation of the hole are eliminated, and even in the case of a cage made of a pressed steel sheet, the lubricating oil sumps can be easily added.

Incidentally, in the above embodiments, although the description has been made using the single row tapered roller bearing 6 as an example, the bearing in which the above lubricating oil sumps 24, 25, 26, 27, 29, 31, 32, 33, 34, 41 are provided may of course be a double row tapered roller bearing, and it can be applied to a cylindrical roller bearing and a self-aligning roller bearing employing a similar pin type cage. Furthermore, although not shown in the drawings, the cage 14 is not limited to the pin type cage. Various cages have at least one annular portion, and this annular portion is regarded as a construction equivalent to the above larger-diameter ring 21, 28, and the above 24, 25, 26, 27, 29, 31, 32, 33, 34, 41 is provided at this annular portion, and by doing so, the various cages can be changed to a cage capable of improving a defective lubrication.

## Claims

1. A cage for a rolling bearing wherein a lubricating oil sump is provided at that surface which will not contact rolling elements, and when the lubricating oil sump is located in lubricating oil stored at a lower portion of the bearing, the lubricating oil is held in the lubricating oil sump, and in accordance with subsequent rotation, the lubricating oil held in the lubricating oil sump is allowed to drop.

2. A cage for a rolling bearing according to claim 1, wherein the lubricating oil sump is formed by forming a hole in the cage.

3. A cage for a rolling bearing according to claim 1, wherein the lubricating oil sump is formed by fixing a container-like member to the cage.

4. A pin type cage for a roller bearing comprising:
a larger-diameter ring, a smaller-diameter ring disposed such that said smaller-diameter ring is spaced a predetermined space from the larger-diameter ring in an axial direction, and a plurality of pins extending between the larger-diameter ring and the smaller-diameter ring and holding rollers of the roller bearing in a manner to enable rolling movement of the rollers; and
a lubricating oil sump is provided at that surface of at least one of said larger-diameter ring and said smaller-diameter ring which will not contact the rollers, and when the lubricating oil sump is located in lubricating oil stored at a lower portion of the bearing, the lubricating oil is held in the lubricating oil sump, and in accordance with subsequent rotation, the lubricating oil held in the lubricating oil sump is allowed to drop.

5. A pin type cage for a roller bearing according to claim 4, wherein said lubricating oil sump is provided at an intermediate area between said pin and said pin so as not to abut with the roller of the roller bearing.

6. A pin type cage for a roller bearing according to claim 4, wherein said lubricating oil sump is formed in a cylindrical radially-inner face of said larger-diameter ring, and extends from the radially-inner side thereof.

7. A pin type cage for a roller bearing according to claim 4, wherein an opening of said lubricating oil sump is inclined relative to a rotating direction.

8. A pin type cage for a roller bearing according to claim 5, wherein the opening of said lubricating oil sump is provided at that portion of said larger-diameter ring close to a radially-outer side thereof and also close to an axially-inner side thereof.

9. A roller bearing comprising an outer ring, an inner ring, a plurality of rollers rollably disposed between said outer ring and said inner ring, and a cage holding said plurality of rollers;
wherein said cage is a pin type cage for a roller bearing as defined in claim 4.

10. A rolling bearing device comprising:
a roller bearing comprising an outer ring, an inner ring, a plurality of rollers rollably disposed between said outer ring and said inner ring, and a cage holding said plurality of rollers;
a housing supporting said roller bearing; and
an oil bath disposed in said housing and holding lubricating oil up to a level above a lowermost end of an outer diameter of said inner ring; and
said cage is a pin type cage for a roller bearing as defined in claim 4.

11. A bearing for wind power generation comprising an outer ring, an inner ring, a plurality of rolling elements, and a cage holding the plurality of rolling elements, said bearing being adapted to support a main shaft having a rotary blade for wind power generation provided at one end portion thereof; wherein the cage is one as defined in claim 1.
